# EUROPEAN PATENT SPECIFICATION

(11) **EP 2 139 182 B1**
(45) Date of publication and mention of the grant of the patent: **23.10.2013**
(21) Application number: 09172895.6
(22) Date of filing: 20.12.2007
(51) Int. Cl.: H04L 12/58

(54) **Messaging system and method**
Nachrichtenübermittlungssystem und -verfahren
Système et procédé de messagerie

(30) Priority: 13.02.2007 GB 0702763
(43) Date of publication of application: 30.12.2009
(62) Divisional of application: 07872069.5
(73) Proprietor: Skype, Dublin 2 (IE)
(72) Inventor: Kutt, Andres, 11912, Tallinn (EE)
(74) Representative: Driver, Virginia Rozanne

(56) References cited:
- WO-A-01/49015
- WO-A-01/97089
- WO-A-2005/004444
- US-A1- 2001 026 609
- US-A1- 2002 087 353
- US-A1- 2003 229 673
- US-A1- 2004 120 504

## Description

This invention relates to a messaging system and method, particularly but not exclusively for use in a peer-to-peer communication system.

The dominant method for communicating a text-based message to a user at the current time is by email. Email is extremely widely used for the transmission of messages between individuals, and it is also used for sending messages from companies and organisations to individuals. Many of the messages sent from companies to individuals are of high importance or contain sensitive information.

When an email is sent from a sender to a receiver, it is first transmitted from the sender's terminal to a simple mail transfer protocol ("SMTP") server. The SMTP server resolves the domain name of the email address to an internet protocol ("IP") address by contacting a domain name server ("DNS"). The message is then queued for delivery to the IP address, which corresponds to the SMTP server of the recipient. The message is eventually delivered to the SMTP server of the recipient and passed to the recipient's incoming mail server (usually a Post Office Protocol 3 ("POP3") or Internet Message Access Protocol ("IMAP") server) and stored. An email client executed on the recipient's terminal must then contact the incoming mail server to download the message in order for it to be viewed by the recipient.

However, there are a number of significant problems with the use of email, particularly in the case of time-critical or sensitive information being sent from a company to an individual.

The first of these problems is the increasing number of "phishing" attacks. Phishing is the act of attempting to acquire sensitive information (for example credit card or bank details, passwords, etc.) by transmitting seemingly official emails purporting to be from a trustworthy person or business with a real need for such information. This can lure the recipient into replying to these emails and providing the sensitive information to the hoaxer.

Therefore, phishing attempts to spoof emails from trustworthy sources. More complex forms of spoofing are also possible, whereby spoofers access SMTP servers and send emails that appear to be from an address of a reputable source, but in fact are not. Phishing and spoofing can therefore lead to a lack of trust in the emails that are received from companies, as the user is unsure if they are genuine.

Another problem with email is spam. Spam is unsolicited emails that are often sent in bulk to a very large number of email addresses. Currently, a very large proportion of email traffic sent over the Internet is spam, and this is increasing all the time. It is very hard to control the spam that is received at a user's account, and this can lead to considerable dissatisfaction on the part of the user. Spam filters can be used, but these can sometimes result in genuine messages being rejected. There is therefore a problem with email in that it is hard for the users to control what messages are received and from whom.

Email is also not an end-to-end secure message delivery system. Email messages are generally not encrypted, and are therefore relatively straightforward to intercept and read. Specific software can be used to encrypt email messages, but this is generally inconvenient to the user. This is a particular problem if the email contains sensitive or personal information. Furthermore, the time it takes to deliver a message using email can be very variable. This is because the messages often need to be queued for delivery (particularly in busy email systems), and the email client needs to actively fetch the message from the server. Therefore, when an email is sent, there is no guarantee of how long it will take to reach the recipient. This can be a particular problem when a service needs to notify a user of an event that requires a rapid response. The sheer volume of spam sent over email exacerbates this problem further, as the overloading and consequent queuing of messages is mostly caused by the processing of spam messages rather than genuine messages.

The sender of an email, such as a company or organisation, may have very little knowledge about the recipient of an email that it is sending. For example, the sender may only be able to deduce some information on the country of the user from the domain of the email address (e.g. the email address "user@example.co.uk" may indicate that the user is based in the United Kingdom). However, many email addresses, such as those with ".com" domains, do not provide the sender with any specific information. This can cause a problem if, for example, the recipient needs to receive the information in a specific language or the information should relate to a particular currency.

There is therefore a need for a technique to address the aforementioned problems with email and provide a secure, faster and more controllable way of providing text-based messages to a user from trusted sources.

WO 01/97089 discloses a method and system for forwarding secure E-mails including receiving a message from a sender, processing the message in a filter layer, and retrieving recipient delivery preferences. For Web delivery, a standard encrypted format message is constructed and stored in a queue. An E-mail message is the generated that includes a hypertext link to the message stored in the queue. Upon request, the message is retrieved and forwarded to the recipient. For non-web delivery, a message is constructed and forwarded to the recipient according to the recipient's preferences.

US 2002/0087353 discloses a method of providing a call connecting service between a business card transmitter and a business card receiver through the medium of a web business card which has a call connecting function and is transmitted to a desired receiver via e-mail.

US 2002/0026609 discloses a method and apparatus facilitating web-initiated communication by telephone, which allows users to contact each other through a trusted central connecting facility.

US 2004/120504 discloses a Click and Dial favourites system which maintains a listing of only the subscribers most frequently accessed telephone numbers.

WO 01/49015 discloses a method for displaying content of a time sensitive e-mail message to a recipient, wherein the content displayed is based on when the recipient opens the time sensitive e-mail message. A sender of the time-sensitive e-mail message establishes content and a rule set for delivering the e-mail message. The rule set contains a predefined time limit for allowing the recipient of the time-sensitive e-mail message to open it. If the recipient fails to open the time-sensitive e-mail message within the predefined time period, then the time-sensitive e-mail message is either deleted from the recipient's mailbox or an alternative message is displayed.

US 2003/0229673 discloses sending time sensitive messages which must be opened within a specified time limit.

According to one aspect of the invention there is provided a method of transmitting a message from a first entity to a terminal of a user over a communication system, comprising: said first entity transmitting said message to a message transmission means; said message transmission means generating a notification message from said message and storing said message in a storage means; transmitting said notification message to a client (108) executed on said terminal over said communication system; and responsive to receiving said notification message, said client retrieves said message from said storage means over said communication system; and displaying said message to said user on a display means of said terminal; a second entity operating the communication system and authorising said first entity to access the message transmission means connected to said communication system; said message comprising an actuator relating to a real time event occurring within the communication system that causes the terminal to perform an action in response to actuation by the user; and said first entity defining a time limit of the real time event and thereby associating with the message a lifespan for delivery of the message, and said client checking whether the time limit has expired, such that if the time limit has expired said client does not retrieve the message from the storage means.

According to a second aspect of the invention there is provided a system for transmitting a message from a first entity to a terminal of a user over a communication system, wherein: said first entity comprises means for transmitting said message to a message transmission means; said message transmission means comprises means for generating a notification message from said message, storage means for storing said message, and means for transmitting said notification message to a client executed on said terminal over said communication system; and said client comprises means for retrieving said message from said storage means over said communication system responsive to receiving said notification message, and means for displaying said message to said user on a display means of said terminal, the communication system is operated by a second entity which comprises means for authorising said first entity to access the message transmission means connected to said communication system; said message comprises an actuator relating to a real time event occurring within the communication system that causes the terminal to perform an action in response to actuation by the user; and said first entity defines a time limit of the real time event and thereby associating with the message a lifespan for delivery of the message, and said client is configured to check whether the time limit has expired, such that if the time limit has expired said client does not retrieve the message from the storage means.

In embodiments, said action may comprise the client initiating a voice call over the communication system using a calling identifier embedded in said message. The client may comprise means for initiating a voice call over the communication system using a calling identifier embedded in said message in response to actuation of the actuator.

Said message may be a voice conference reminder message and the calling identifier embedded in said message may be the voice conference calling identifier.

The calling identifier may be a telephone number or a voice over internet protocol network identity.

Said message may be a message from a directory enquiry service and the calling identifier embedded in said message may be a calling identifier of a further entity requested by the user from the directory enquiry service.

The calling identifier may be one of a telephone number, a voice over internet protocol network identity, an email address, or a short message service number.

Said action may comprise the terminal executing a web browser and displaying a document located at an address embedded in said message. The system may comprise a web browser executed on said terminal in response to actuation of the actuator, the web browser being arranged to display a document located at an address embedded in said message.

Said message may be a message from an auction website operator and the address embedded in said message may be the address of a webpage relating to an auction in which the user is participating.

Said message may be a message from a payment service operated by the second entity and the address embedded in said message may be the address of a webpage relating to payments made by the user.

The method may further comprise the step of said first entity accessing information relating to said user from said message transmission means prior to the step of transmitting said message. Said first entity may comprise means for accessing information relating to said user from said message transmission means.

Said information relating to said user may comprise the language of the user and/or the currency of the user.

The method may further comprise the step of said message transmission means transmitting a reporting message to said first entity responsive to said client retrieving the message. Said message transmission means may comprise means for transmitting a reporting message to said first entity responsive to said client retrieving the message.

The method may further comprise the step of said message transmission means transmitting a reporting message to said first entity responsive to the expiry of said time limit. Said message transmission means may comprise means for transmitting a reporting message to said first entity responsive to the expiry of said time limit.

Said communication system may be a peer-to-peer communication system.

According to a third aspect of the invention there is provided a user terminal connected to a communication system and arranged to receive a message transmitted from a first entity over the communication system, comprising: a client executed on said terminal, comprising means for receiving a notification message transmitted by a message transmission means connected to said communication system, and means for retrieving said message from a storage means over said communication system responsive to receiving said notification message; and display means for displaying said message to said user; said message comprises an actuator relating to a real time event occurring within the communication system that causes the terminal to perform an action in response to actuation by the user; and said first entity defines a time limit of the real time event and thereby associating with the message a lifespan for delivery of the message, and said client is configured to check whether the time limit has expired, such that if the time limit has expired said client does not retrieve the message from the storage means.

For a better understanding of the present invention and to show how the same may be put into effect, reference will now be made, by way of example, to the following drawings in which:
Figure 1 shows a system for providing messages to a user over a peer-to-peer network;
Figure 2 shows a flowchart for the operation of the system in Figure 1;
Figure 3 shows user options for the operation of a peer-to-peer client;
Figure 4 shows a pop-up alert window for a message from an auction website;
Figure 5 shows a message from an auction website listed in an event panel of the user interface of a peer-to-peer client;
Figure 6 shows a large message window for a message from an auction website;
Figure 7 shows a small message window for a message from an auction website;
Figure 8 shows a message from an auction website listed in a history tab of the user interface of a peer-to-peer client;
Figure 9 shows a pop-up alert window for a message from an account system;
Figure 10 shows a message from an account system listed in an event panel of the user interface of a peer-to-peer client;
Figure 11 shows a message window for a message from an account system;
Figure 12 shows a message from an account system listed in a history tab of the user interface of a peer-to-peer client;

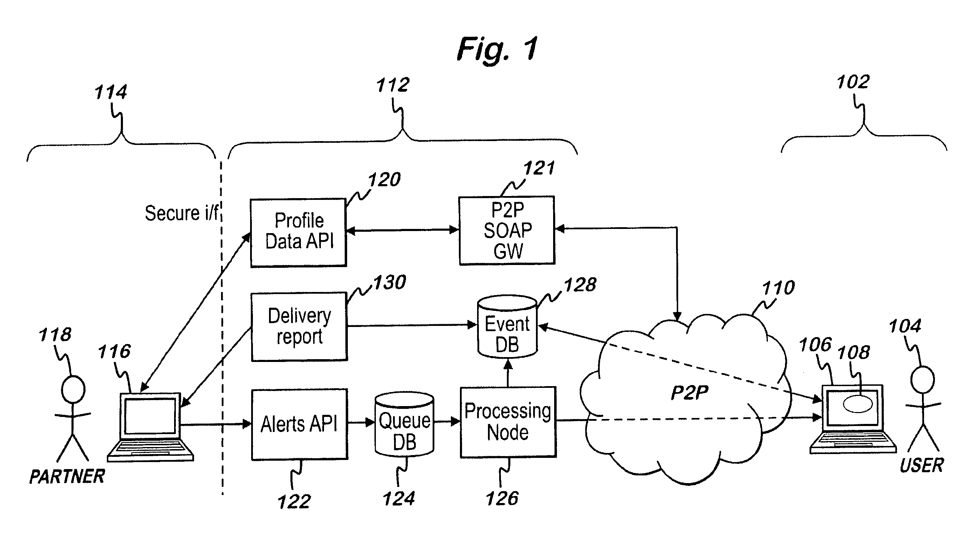

Reference is first made to Figure 1, which illustrates a system for providing messages to a recipient user from a sender. The system operates using a peer-to-peer ("P2P") network topology built on proprietary protocols. In particular, the system shares infrastructure with a P2P communication system. An example of this type of communication system is the Skype^{™} system. To use a peer-to-peer service, the user must install and execute client software on their user terminal. The client software is provided with a digital certificate from a central server. Once the client software has been provided with the certificate communication can subsequently be set up and routed between users of the P2P without the further use of a central server. In particular, the users can establish their own communication routes through the P2P system based on exchange of one or more digital certificates (or user identity certificates, "UIC") to acquire access to the P2P system. The exchange of the digital certificates between users provides proof of the user's identities and that they are suitably authorised and authenticated in the P2P system. Therefore, the presentation of digital certificates provides "trust" in the identity of the user. The client software provides voice over IP ("VoIP") and instant messaging ("IM") connections. It is therefore a characteristic of peer-to-peer communication that the communication is not routed using the central server but directly from end-user to end-user. Further details on such a P2P system are disclosed in WO 2005/009019.

Figure 1 illustrates three "domains" in the system. The first is the user domain 102 comprising the user 104 and a user terminal 106 operated by the user 104. The user terminal 106 executes client software 108 provided by the operator of the P2P network. The client 108 is used to provide VolP calls and IM communication, and also for the delivery of messages. The user terminal 106 is connected to the P2P network 110. Note that a large number of users may be present in the system, but only one is shown in Figure 1 for clarity. The second domain is the P2P backend domain 112. The P2P backend domain 112 comprises servers and nodes, operated by the operator of the P2P network, that enable the message delivery system, as described hereinafter. The P2P backend domain 112 may therefore be referred to as the message transmission system. The third domain is the partner domain 114. This domain comprises a terminal 116 operated by the sender of a message destined for the user 104. The sender of the message is known to the operator of the P2P system and trusted, and hence is referred to hereinafter as a partner 118. Note that several partners may be present that can transmit messages to users, but only one is shown in Figure 1 for clarity.

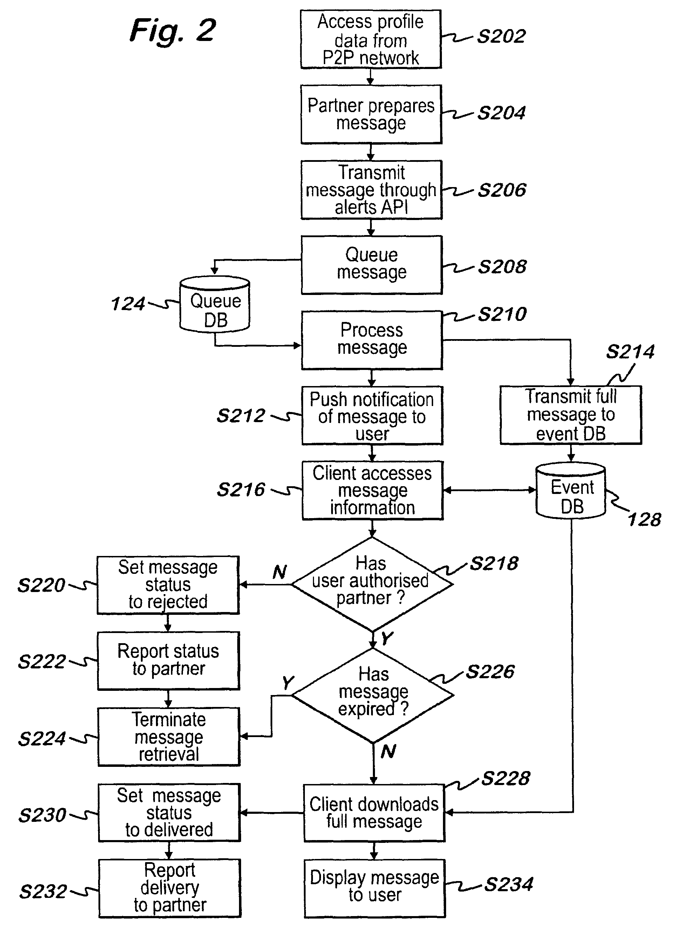

The operation of the system shown in Figure 1 is illustrated with reference to the flowchart of Figure 2. To begin the process of transmitting a message to user 104, the partner 118 uses terminal 116 to access profile data for the user in question. This is achieved by the partner accessing the data via a profile data application programming interface ("API") 120 provided by the P2P network operator. Access to this API is via a secure interface. The secure interface ensures that only authorised partners can gain access to this information. The interface can be secured, for example, by the P2P network operator providing an authentication certificate to the trusted partner, which must be presented to the API when access is required. Access to the API may also only be permitted from terminals with specific IP addresses, which the partner has provided to the P2P network operator in advance.

The profile data can comprise information about the recipient that permits the partner to provide a greater degree of personalisation to the message than would otherwise be possible. For example, the profile data may include the preferred language of the user 104 or the appropriate currency for the country of the user 104. The profile data may also indicate whether or not the user has chosen to receive messages from this particular partner. Furthermore, the profile data may provide information on the version of the client software 108 executed on the user terminal 106, and in particular whether this version is able to receive the message. Profile data may further include information on the current presence state of the user 104, for example whether the use is online, offline, busy or unavailable.

In a preferred embodiment, the profile data API 120 is accessed using the simple object access protocol ("SOAP"), which is a standard for exchanging messages over the World Wide Web. The profile data API 120 obtains the profile data information from a P2P SOAP gateway ("GW") 121, which provides an interface between the profile data API 120 and the P2P network 110, where the data is held distributed among the peers that make up the P2P network. The profile data is "live" in the sense that it corresponds to the state of the user at the time the information is accessed. This provides an important advantage over other messaging systems, as the information about the user is never out of date. In alternative embodiments, a different protocol to SOAP can be used, such as the lightweight directory access protocol ("LDAP").

Referring to Figure 2, the step of obtaining the profile data from the P2P network is shown in S202. Note that, for some applications, the accessing of profile data may not be required. For example, some partners may not require any information about the preferences of the user or his current state in order to prepare the message. This may depend on the content of the message being sent.

If the profile information indicates that the user can receive the message (e.g. the user terminal 106 is executing the correct version of the client software 108 and has not declined to receive messages from this partner 118) then, in step S204, the partner 118 prepares the content of the message. The content can be tailored according to the profile data, for example it can be in a particular language or display a particular currency.

The message is then transmitted from the terminal 116 of the partner 118 to the backend domain 112 of the P2P system in step S206. This is achieved by transmitting the message using an alerts API 122. The alerts API 122 is a SOAP API (like the profile data API 120) and provides an interface for the message to be provided to the backend domain. As with the profile data, the interface is a secure interface protected by, for example, authentication certificates and fixed IP addresses. This prevents messages being sent from sources that are not trusted by the operator of the P2P network.

From the alerts API 124, the message is sent to a queue database ("DB") 124. The queue DB 124 stores the message until it is ready to be processed. In preferred embodiments, the queue DB is a first in, first out ("FIFO") queue, wherein the messages from multiple partners are outputted from the queue in the order in which they arrive. In alternative embodiments, priorities may be allocated to the messages, such that those with higher priorities are outputted from the queue first. The queuing of messages is shown in step S208.

In step S210, the message from the queue DB 124 is processed. The processing is performed by a processing node 126. The processing node 126 performs several functions with the message. The processing node 126 generates a notification message, and this is transmitted (i.e. "pushed") to the client 108 executed on the user terminal 106 over the P2P network 110, as shown in step S212. In parallel with this, the message is also transmitted from the processing node 126 to an event DB 128 (where it is stored until it is to be delivered to the user 104) as shown in step S214.

The notification message pushed to the client 108 notifies the client that a message is waiting to be delivered. If the user 104 is not online, then the notification message cannot be provided to the client 108. In this instance, the notification message is stored, and delivered to the client 108 when the user 104 reconnects to the P2P network 110 and comes online. The notification message is stored in a P2P database (not shown in Figure 1) which is located within the P2P network 110, such that the data stored in the database is distributed amongst the peers that make up the P2P network 110. However, a time limit may be set for the message by the partner, such that if the notification message is not delivered to the client 108 within a fixed time period, the message stored in the event DB 128 is not delivered to the user. This is achieved by the client 108 performing a check before downloading the message from the event DB 128 (described in more detail below) in case the user has been delivered the notification message from the P2P database, but the time limit has already expired by the time the process to fetch the message is started. The use of a time limit allows time-critical messages to be sent, which need to be reacted to within a particular time-frame to be relevant, such that the user will not be exposed to out-of-date messages that have already passed the relevant time-frame.

In addition to the notification message being pushed to the client 108, the client may also actively check with the processing node 126 whether there are any notification messages. In particular, this may occur immediately after the client 108 is executed on the terminal 106, or when the user 104 logs in to the P2P network 110.

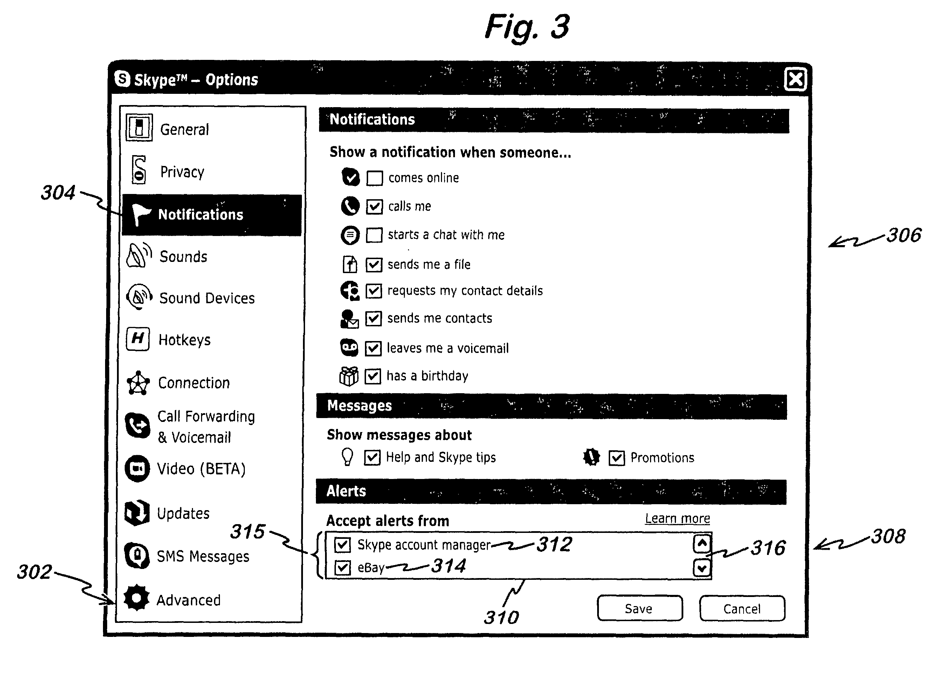

Upon receiving a notification message, the client 108 knows that there is a message waiting to be delivered for the user. The client 108 then connects to the event DB 128 (where the message was stored in step S214) over the P2P network 110, and accesses some information on the waiting message (S216). In particular, in step S218, the client 108 checks the identity of the partner that has sent the message and compares this to a list of partners that the user has indicated that he is willing to accept messages from (discussed in more detail with reference to Figure 3, below). If the partner is not in this list, then the message is rejected. This is recorded as a "rejected" status in the event DB (in step S220), which is reported to the partner in step S222 (described in more detail below). The message is not downloaded to the user terminal, and the message delivery process ceases in step S224. If the user is accepting messages from this partner, then the client also checks (in step S226) whether the message in the event DB 128 has a time limit set which has expired. If a time limit has expired the message is not downloaded and the process terminates. However, if the above checks both indicate to the client 108 that the message is from an approved partner and has not expired (or there is no time limit), then in step S228 the client 108 downloads the message to the user terminal 106. The event DB 128 logs the updated information on the status of the message. In particular, in step S230, the status is updated to "delivered" when the message is fetched, and it can store information such as the time that it was fetched by the client 108. The updated status is reported to the partner in step S232 as described in more detail below.

Once the message has been downloaded to the user terminal 106, the message can be displayed to the user 104 using the client 108 (shown in step S234). This is described in more detail hereinafter.

As mentioned above, the status of the message also in the event DB 128 is reported to the partner 118 (e.g. in step S 222 and S232). The status of the message is reported to the partner 118 by a delivery report node 130 (shown in Figure 1). The delivery report node periodically queries the event DB 128 in order to determine the status of a message. Upon detecting a change in the status of the message the delivery report node 130 transmits a reporting message to terminal 116 to notify the partner of the updated status. For example, the reporting message can notify the partner that a particular message has been delivered to the client 108 at a particular time. In alternative embodiments, the delivery report node 130 can provide a status report to the partner 118 every time it checks the status at the event DB 128, instead of only reporting when there is a change in status.

Several possible status states exist for a message, and these are maintained and stored at the event DB 128. In preferred embodiments, a delivery report sent to the partner 118 will give a status for a message of either "delivered", "expired", "error" or "rejected". A "delivered" status indicates that the message has been fetched by the client 108 and delivered. This may also be stored with a timestamp of the delivery time. An "expired" status indicates that a message had a time-limit associated with it, and the message was not delivered within this time. This status therefore indicates to the partner 118 that the message was not delivered to the user 104 due to the expiry of the time-limit. An "error" status indicates that the message was not delivered due to an error or failure in the system. A "rejected" status indicates to the partner 118 that the user did not download the message because the user's preferences were set such that he had chosen not to receive messages from this partner (discussed in more detail with reference to Figure 3, below).

The above-described system has several advantageous features. The message sent to the user 104 is delivered very quickly to the user, if the user is online when the message is sent. This is due to the controllable nature of the messaging system, whereby only specific partners can send messages. This permits control over the load of the system, and allows the nodes such as the queue DB 124 and processing node 126 to be managed such that they are not overloaded, which reduces transmission delay. In particular, the controllable nature of the messaging system ensures that spam is not being sent, thereby eliminating this source of message congestion. Furthermore, the part of the system that uses the P2P network 110 scales reliably, regardless of the number of users in the system, which means that the delivery of messages over the P2P network 110 does not become a bottleneck in the system. Specifically, the absence of central servers required to send the messages across the P2P network 110 means that the messages sent from the backend domain 112 to the user domain 102 over the P2P network 110 can be rapidly delivered even if a large number of users are present.

The above-described system is also end-to-end secure. The messages sent between the partner and the alerts API 122 and profile data API 120 are encrypted with public/private key encryption. Every message transmitted over the P2P network 110 is also fully encrypted. The messages also cannot be spoofed, as only trusted partners have access to the secure interface to the profile data API 120 and alerts API 122. The users can therefore trust the messages they receive, as they cannot be phishing attacks.

The messaging system also provides reliable delivery information back to the partner. Delivery information in a known email system is unreliable, as delivery notifications are often either not sent back to the sender by the email client (as they can be overridden by the user), or an email server may indicate that a message has been received even though the email client of the end user has not received the message, thereby giving a false indication of delivery. The message delivery system of Figure 1 does not have this problem, as the delivery notification cannot be overridden by the user, as it is determined though querying the event DB 128, and the status is not updated until the client 108 actually fetches the message.

Reference is now made to Figure 3, which shows a screenshot of user options for the operation of the client 108. Region 302 shows several categories of user options, of which the category "notifications" 304 has been selected. Region 306 shows several notification options that are unrelated to the messaging system in question and are not considered further here. Region 308 of the screenshot of Figure 3 shows the options related to the message delivery. In particular, list box 310 shows a list of partners that have been authorised by the operator of the P2P network to send messages to users. For example, two example partners of "Skype account manager" 312 and "eBay" 314 are shown illustrated in Figure 3. The user 104 of the client 108 can use check boxes 315 next to the names of the partners to select or deselect the receipt of messages from the listed partners. More than two partners may be listed in box 310, and these can be viewed using the scrollbar 316.

The options in region 308 of Figure 3 are important as they provide control to the end user 104 of the messages that are received. Therefore, the user 104 can readily prevent messages from being received from certain partners, whilst allowing messages to be received from others. This is in contrast to the case of email, where the user has little control over who messages are received from. If a user has deselected a partner from the list 310, then this is reflected in the user's profile data, and is therefore communicated to the partner (in step S202 of Figure 2). This indicates to the partner that a message should not be sent to this user. Even if a message is sent to this user from this partner (for example by the partner ignoring or not accessing the profile data, or the user changing his preferences to deselect a partner in the intervening period between a message being sent by the partner and the notification being received at the user terminal), the client 108 would detect (in step S218) that the user did not wish to receive messages from this partner, and would reject the message before the message is downloaded to the user terminal. The status associated with the message in the event DB 128 is then set to "rejected", as mentioned above. This ensures that the user 104 never receives messages from a partner he has deselected in list 310.

In further embodiments, an additional check of the list of partners 310 is also made by the client 108 after the message has been downloaded to the user terminal, but before the message is actually shown to the user 104 on a display of the user terminal 106. This extra check is useful in the case that a user has selected to receive messages from a particular partner that has sent a message, and the client has already performed the check in step S218, but the user then subsequently deselects the partner from the list 310 in the intervening period between the check in step S218 and the message being displayed to the user. If the client did not perform the extra check, then the user would be displayed the message, even though he had deselected the partner. The extra check after the message has been downloaded ensures that this cannot occur.

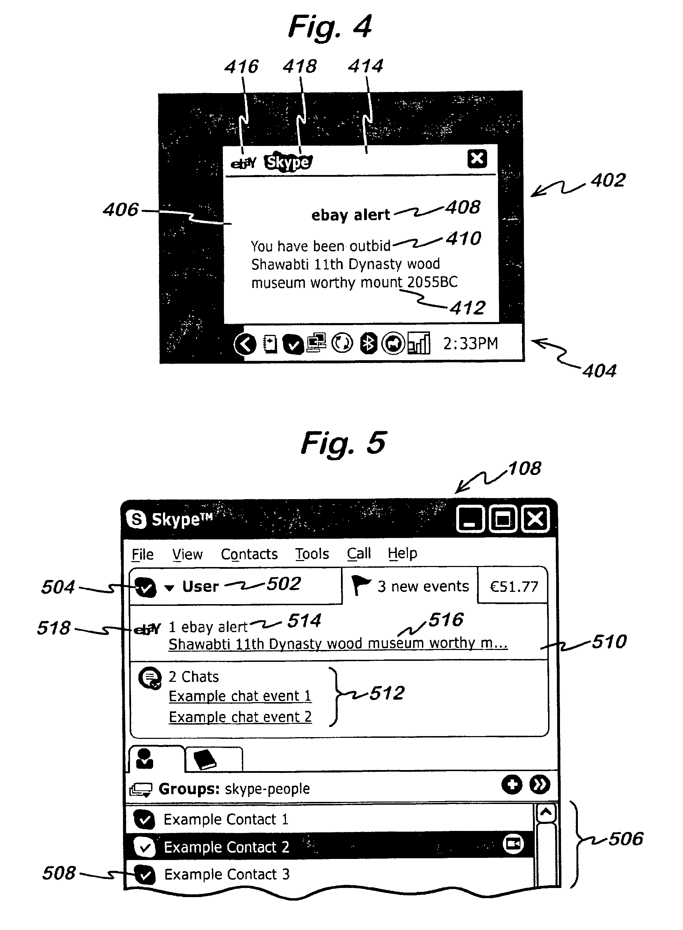

Reference is now made to Figures 4 to 12, which illustrate the user interfaces of the client 108 that are shown to the user 104 when a message is delivered. Figures 4 to 8 show an exemplary application of the messaging system wherein the partner is the operator of an auction website in which the user 104 is bidding for an item. Specifically, the auction website partner transmits a message to the user when the user has been outbid on an item. This type of application leverages the advantageous features of the messaging system, particularly the rapid delivery of the message, as the message needs to be reacted to within a certain period of time due to the real-time nature of the auction. Furthermore, the secure nature of the system ensures that third parties cannot intercept the messages and determine what the user is purchasing. The user 104 has trust in the messages received, as he is aware that they cannot be spoofed, and only trusted partners of the P2P network operator are allowed to transmit messages.

Figure 4 shows the user interface presented to the user 104 on the terminal 106 when a message is downloaded by the client 108 (step S228 in Figure 2). The user interface in Figure 4 is a pop-up alert 402 that appears from the system tray 404 of the operating system of terminal 106 (this is also known as a "toast" window). The pop-up alert 402 comprises a main window 406 in which is shown a caption 408 for the message and also some more detailed information on the message, such as a title 410 and subject 412. The pop-up alert also has a header bar 414 comprising a logo for the partner 416 and the P2P network operator 418, which allows the user to rapidly identify the source of the message.

If the user 104 has used the client 108 to log in to the P2P network 110, but has set his presence state (in the client 108) to "busy" or "do not disturb" (as opposed to "online" or "available"), then the pop-alert is not displayed to the user when a message is fetched. Instead, the message is simply shown as an event in the client window, as will be described below with reference to Figure 5.

Figure 5 shows a portion of the user interface of the client 108, after a message has been fetched. The P2P network username 502 of the user 104 is shown in the client, and the current presence state of the user 104 is indicated by icon 504. The client 108 displays a list of contacts 506 that the user has stored in the client, and VoIP or IM communication can be established with these contacts by selecting them. The presence state for each of the contacts is shown as an icon next to their name, for example as shown in icon 508.

When certain communication events occur, the client displays an event panel 510 to alert the user to these events. Example communication events include missed calls, voicemail messages and missed IM chats. An example of two IM chat events is shown at 512. The event panel is also used to indicate to the user that there is a message from a partner waiting to be read. The entry in the event panel for the message displays similar information to the pop-up alert in Figure 4, i.e. a caption 514, a subject 516 and a partner icon 518. The message is shown in the event panel following the display of the pop-up alert (as shown in Figure 4) if the user is online, or, if the user has his presence set to "do not disturb", the message is shown in the event panel immediately, without displaying a pop-up alert.

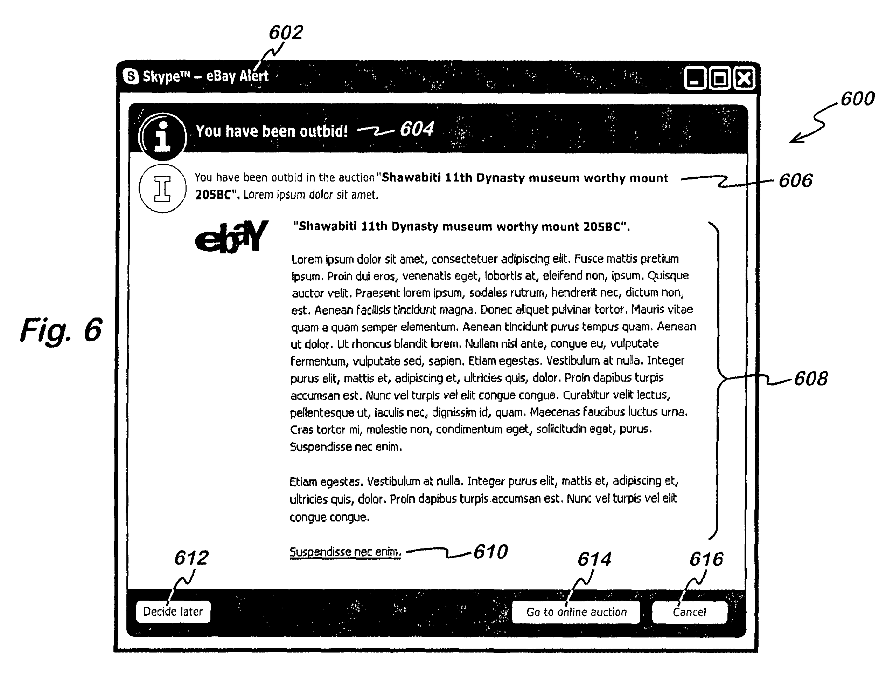

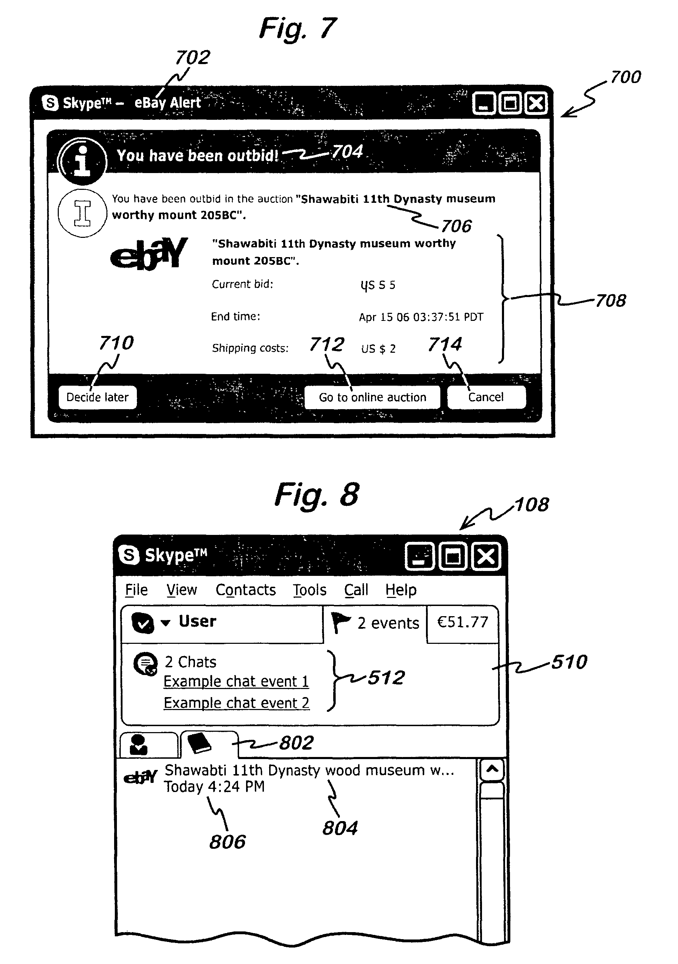

The subject 516 of the message shown in the events panel 510 is a hyperlink that can be clicked by the user, and when this is done the full message is displayed to the user, as illustrated in Figures 6 and 7. Figure 6 illustrates a first embodiment of the full message window, and Figure 7 illustrates an alternative embodiment of the full message window.

Referring first to Figure 6, this shows a large version of the full message window 600 that is displayed to the user 104 when he clicks on the link in the event panel. The large message window 600 comprises a caption 602, a title 604, a subject 606, a text portion 608 containing the main body of the message, and a footer 610. The contents of all of these sections are determined by the partner 118 when preparing the message, and various aspects of the content (e.g. the language used) is determined by the profile data obtained as the first step in the message sending process.

The message window 600 shown in Figure 6 also comprises three buttons. The first button is a "decide later" button 612. If this button is activated by the user, then the message window is closed, but the message notification remains in the events panel shown in Figure 5. Therefore, this button allows the user to close the message window without taking any action in response to it, and it will still be clearly visible to the user in the events panel for when the user does decide to act upon the message. The inclusion of this button in the message is optional, and whether or not the partner chooses to include it depends on the content and type of the message.

The second button is an "action" button 614. In the example shown in Figure 6, the action button 614 is labelled "go to online auction". In this example, when the user activates the button a web-browser program is executed, which displays to the user the relevant webpage of the auction website to which the message relates. This is achieved by associating the action button 614 with a hyperlink comprising the webpage address (e.g. a uniform resource identifier, "URI") in the message. This allows the user to take action in response to the message, for example placing a higher bid in the auction in response to being outbid. After the action button 614 is activated, the message window 600 is closed, and the message notification in the events panel in Figure 5 is removed. The message is not deleted however, but is stored and remains accessible from the client, as discussed with reference to Figure 8. The function (and label) of the action button 614 is determined by the partner creating the message, and the action taken is related to the content of the message. Apart from being taken to a webpage, other actions are also possible, such as initiating a call over the VolP network or making a call to a public switched telephone network ("PSTN") number. These alternative actions are considered hereinafter in more detail with reference to other applications of the messaging system.

The third button is a "cancel" button 616. If this button is activated by the user, the message window 600 is closed without any further actions being taken, and the message notification in the events panel in Figure 5 is removed. The message is not deleted however, but is stored and remains accessible from the client, as discussed with reference to Figure 8.

Figure 7 illustrates an alternative, more compact form of the full message window 700, which can be used by partner instead of the message window in Figure 6 if there is a smaller amount of information to be sent in the message. The small message window 700 comprises a caption 702, title 704, subject 706 and text 708, in common with the larger message window shown in Figure 6. The small message window 700 also comprises the same three buttons (710, 712, 714) as in the larger message window shown in Figure 6.

Reference is now made to Figure 8, which illustrates a portion of the user interface of the client 108, after either the action button (614 or 712) or cancel button (616 or 714) has been activated. The event panel 510 is still present, and this still shows the two example chat events 512. However, the message notification is now longer shown in the events panel 510, as the user has viewed and acted on (or cancelled) the message. The message can still be viewed however by the user accessing a "history" tab 802 in the client 108. The history tab 802 displays previous events such as past calls and IM conversations that were made using the client. The message from the auction website partner can seen listed in the history tab 802 with a subject 804 and a timestamp of its delivery 806. This allows the user to access and re-read the message even after it has been acted on or cancelled.

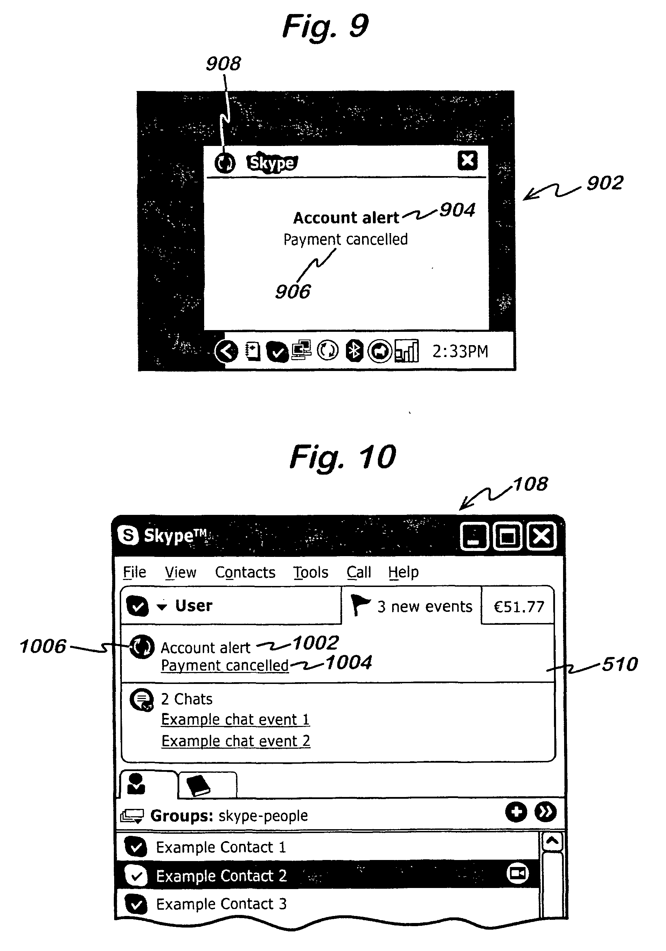

Figures 9 to 12 show a second exemplary application of the messaging system, wherein the messages relate to the management of the user's account in the P2P communication system. The partner in this example is therefore the same as the P2P network operator. Specifically, in this example, the user has completed a payment into his account, but due to a problem (e.g. the payment was rejected by the credit card provider) the payment has been cancelled, and a message is sent to notify the user. The messaging system is advantageous in this application because it is secure and not spoofable, and the message relates to sensitive information (i.e. payments). Therefore, the user can trust the messages as being genuine. Furthermore, the rapid delivery of the message allows the user to quickly rectify the problem without significant delay.

Figure 9 shows a pop-up alert 902 similar to that shown in Figure 4, except in this instance the caption 904 and title 906 relate to payments, and the icon 908 indicates that the partner is the payment system of the P2P network operator. The operation is otherwise identical to that described above with reference to Figure 4.

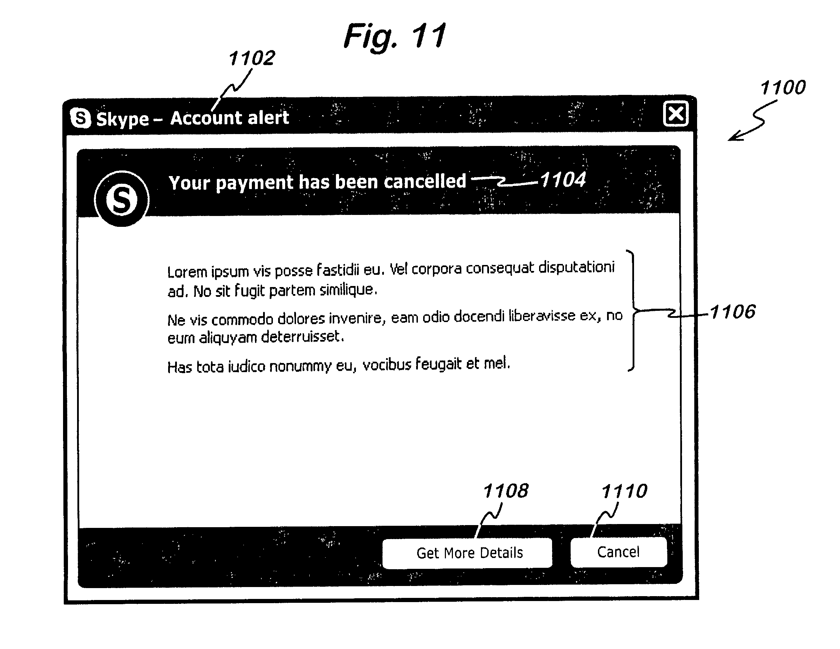

Figure 10 shows a portion of the client 108 user interface, similar to that shown in Figure 5. As with Figure 5, the message notification is shown in the event panel 510, with a caption 1002, hyperlinked title 1004 and icon 1006. When the user clicks on the title 1004, he is displayed the message window 1100 shown in Figure 11. As with the message window 600 shown in Figure 6, this comprises a caption 1102, title 1104 and message text 1106. In this example the partner has chosen not to include other optional items such as a subject line and footer. The message window 1100 also comprises an action button 1108 labelled "get more details", and when this is activated by the user he is displayed a webpage that outlines the reasons for the payment refusal and suggestions for how to correct this or make alternate purchases. The webpage may be displayed in a web-browser executed on the user terminal in response to the activation of the action button 1108, or alternatively in a window of the client 108. In alternative embodiments, activation of the action button 1108 can cause the client to make a voice call to an operator. This is achieved by associating the action button with a hyperlink that is recognised by the client (e.g. a URI of the type "callto://..."), and causes the client to initiate voice communication with a calling identifier (such as a P2P network identity or a PSTN number) embedded in the hyperlink. A cancel button 1110 is also present, which operates in the same way as described above with reference to Figure 6. Note that in this example the partner has chosen not to include a "decide later" button.

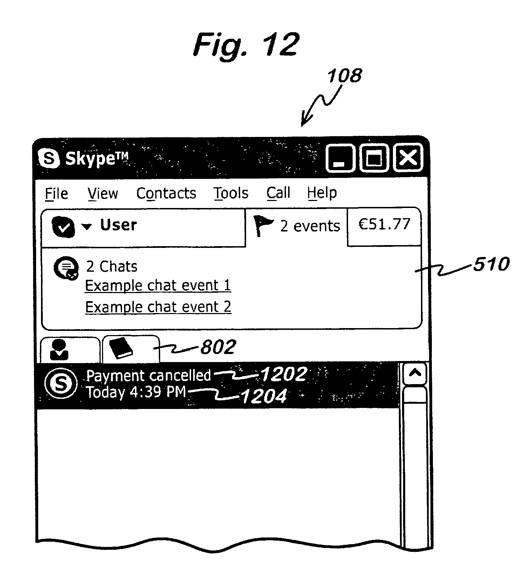

After the action button 1108 or cancel button 1110 has been activated, the message notification is removed from the event panel 510, as shown in Figure 12, and is now shown in the history tab 802. The title of the message 1202 is shown, along with a timestamp 1204 of its delivery time.

A further application of the messaging system is for the delivery of reminders of an event to a user. A specific example of this is a reminder for the user to join a Skypecast. A Skypecast is a large-scale VoIP voice conference that is hosted over the P2P network. More details on Skypecasts can be found in GB0608595.5. A user can browse a list of up-coming Skypecasts, and request to be reminded when a particular Skypecast is about to begin. At the start time of the Skypecast the P2P operator sends a message to the user using the message delivery system, and similar messages are displayed as described above with reference to Figures 4 to 12. The action button displayed in the main message window comprises a hyperlink containing the calling identifier for the Skypecast, and will cause the client to connect to the Skypecast in question, thereby starting a VoIP call with the other participants of the Skypecast.

The sending of reminders is particularly suited to this type of messaging system as the messages are sent very rapidly to the user. This is useful as the messages relate to an event (e.g. the beginning of a Skypecast) that is happening in real-time, and must therefore be acted upon within a certain timeframe. Furthermore, it is also advantageous that the messaging system can associate a lifespan with a message, after which it is discarded if the user is not online and has not received the message. This is useful for reminders if they relate to time-limited events, as there is no point delivering a reminder relating to an event that has already finished.

Another further application of the messaging system is for the delivery of information in response to a request from a user. A specific example of this is a telephone directory enquiry service. A user may wish to find out the telephone number of a company or organisation (e.g. the telephone number of a restaurant), and to do this he uses the client 108 to call a directory service using the VoIP P2P network. The user speaks to an operator and requests the number. In known systems, the operator would simply read the number to the user, and the user would need to write down the number separately, or alternatively the operator would redirect the call directly to the requested number. This has the disadvantages that the user must have means for writing the number down immediately to hand, or if the call is redirected the user does not have a record of the number for the next time he wishes to call it.

These disadvantages can be avoided by the operator of the directory service sending the information directly to the user in a message using the messaging system described above. The user is displayed similar messages as described above with reference to Figures 4 to 12. In particular, the text portion of the main message window (as in Figure 6 and 11) contains the telephone number requested by the user, and the action button causes the client 108 to call the telephone number in question directly (i.e. the action button has an embedded "callto:" hyperlink containing the telephone number), without the user needing to type in any information. As the message is stored in the history tab 802, the user can gain access to the information again at a later date. Alternatively, the action button in the message window can cause the telephone number requested to be added as a contact in the contact list 506 of the client 108. The messaging system described herein is also useful for supplying information in response to a request from a user as the messages are delivered very rapidly to the user, which is important as the user would expect an immediate response to their query.

Note that the information sent to the user from the directory service is not limited to a telephone number. The information can be a P2P network identity (in which case the action button can initiate a call to the P2P ID using VoIP or initiate an IM conversation), an email address (in which case the action button causes the execution of an email client with the address pre-entered in an email), a short message service ("SMS") number (in which case the action button opens a window in the client for the sending of an SMS), or any other type of contact information.

While this invention has been particularly shown and described with reference to preferred embodiments, it will be understood to those skilled in the art that various changes in form and detail may be made without departing from the scope of the invention as defined by the appendant claims.

## Claims

1. A method of transmitting a message from a first entity (118) to a terminal (106) of a user (104) over a communication system (110), comprising:
said first entity transmitting said message to a message transmission means (112);
said message transmission means generating a notification message from said message and storing said message in a storage means (128);
transmitting said notification message to a client (108) executed on said terminal over said communication system; and
responsive to receiving said notification message, said client retrieves said message from said storage means over said communication system; and
displaying said message to said user on a display means of said terminal;
a second entity operating the communication system and authorising said first entity to access the message transmission means connected to said communication system;
**characterised by**:
said message comprising an actuator relating to a real time event occurring within the communication system that causes the terminal to perform an action in response to actuation by the user; and
said first entity defining a time limit of the real time event and thereby associating with the message a lifespan for delivery of the message, and said client checking whether the time limit has expired, such that if the time limit has expired said client does not retrieve the message from the storage means.

2. A method according to claim 1, wherein said action comprises the client initiating a voice call over the communication system using a calling identifier embedded in said message.

3. A method according to claim 2, wherein said message is a voice conference reminder message and the calling identifier embedded in said message is the voice conference calling identifier.

4. A method according to claim 3, wherein the calling identifier is a telephone number or a voice over internet protocol network identity.

5. A method according to claim 2, wherein said message is a message from a directory enquiry service and the calling identifier embedded in said message is a calling identifier of a further entity requested by the user from the directory enquiry service.

6. A method according to claim 5, wherein the calling identifier is one of a telephone number, a voice over internet protocol network identity, an email address, or a short message service number.

7. A method according to claim 1, wherein said action comprises the terminal executing a web browser and displaying a document located at an address embedded in said message.

8. A method according to claim 7, wherein said message is a message from an auction website operator and the address embedded in said message is the address of a webpage relating to an auction in which the user is participating.

9. A method according to claim 7, wherein said message is a message from a payment service operated by the second entity and the address embedded in said message is the address of a webpage relating to payments made by the user.

10. A method according to any preceding claim, further comprising the step of said first entity accessing information relating to said user from said message transmission means prior to the step of transmitting said message.

11. A method according to claim 10, wherein said information relating to said user comprises the language of the user and/or the currency of the user.

12. A method according to any preceding claim, further comprising the step of said message transmission means transmitting a reporting message to said first entity responsive to said client retrieving the message.

13. A method according to any preceding claim, further comprising the step of said message transmission means transmitting a reporting message to said first entity responsive to the expiry of said time limit.

14. A method according to any preceding claim, wherein said communication system is a peer-to-peer communication system.

15. A system for transmitting a message from a first entity (118) to a terminal (106) of a user (104) over a communication system (110), wherein:
said first entity comprises means for transmitting said message to a message transmission means (112);
said message transmission means comprises means (126) for generating a notification message from said message, storage means (128) for storing said message, and means for transmitting said notification message to a client (108) executed on said terminal over said communication system; and
said client comprises means for retrieving said message from said storage means over said communication system responsive to receiving said notification message, and means for displaying said message to said user on a display means of said terminal,
the communication system is operated by a second entity which comprises means for authorising said first entity to access the message transmission means connected to said communication system;
**characterised in that**:
said message comprises an actuator relating to a real time event occurring within the communication system that causes the terminal to perform an action in response to actuation by the user; and
said first entity defines a time limit of the real time event and thereby associating with the message a lifespan for delivery of the message, and said client is configured to check whether the time limit has expired, such that if the time limit has expired said client does not retrieve the message from the storage means.

16. A user terminal (106) connected to a communication system (110) and arranged to receive a message transmitted from a first entity (118) over the communication system, comprising:
a client (108) executed on said terminal, comprising means for receiving a notification message transmitted by a message transmission means (112) connected to said communication system, and means for retrieving said message from a storage means over said communication system responsive to receiving said notification message; and
display means for displaying said message to said user;
**characterised in that**:
said message comprises an actuator relating to a real time event occurring within the communication system that causes the terminal to perform an action in response to actuation by the user; and
said first entity defines a time limit of the real time event and thereby associating with the message a lifespan for delivery of the message, and said client is configured to check whether the time limit has expired, such that if the time limit has expired said client does not retrieve the message from the storage means.

## Patentansprüche

1. Verfahren zum Übertragen einer Nachricht von einer ersten Entität (118) an ein Endgerät (106) eines Benutzers (104) über ein Kommunikationssystem (110), wobei das Verfahren Folgendes umfasst:
Übertragen der Nachricht an ein Nachrichtenübertragungsmittel (112) durch die erste Entität;
Erzeugen einer Benachrichtigungsnachricht aus der Nachricht und Speichern der Nachricht in einem Speichermittel (128) durch das Nachrichtenübertragungsmittel;
Übertragen der Benachrichtigungsnachricht an einen Client (108), der auf dem Endgerät ausgeführt wird, über das Kommunikationssystem und
als Reaktion auf das Empfangen der Benachrichtigungsnachricht ruft der Client die Nachricht von dem Speichermittel über das Kommunikationssystem ab; und
Anzeigen der Nachricht dem Benutzer auf einem Anzeigemittel des Endgeräts;
Betreiben des Kommunikationssystems und Autorisieren der ersten Entität, auf das Nachrichtenübertragungsmittel zuzugreifen, das mit dem Kommunikationssystem verbunden ist, durch eine zweite Entität;
**dadurch gekennzeichnet, dass**:
die Nachricht einen Auslöser umfasst, der ein Echtzeit-Ereignis betrifft, das in dem Kommunikationssystem auftritt, und der bewirkt, dass das Endgerät eine Aktion als Reaktion auf Auslösung durch den Benutzer durchführt; und
die erste Entität eine Zeitbegrenzung des Echtzeit-Ereignisses definiert und dadurch mit der Nachricht eine Laufzeit für die Auslieferung der Nachricht in Verbindung bringt, und der Client prüft, ob die Zeitbegrenzung abgelaufen ist, so dass, wenn die Zeitbegrenzung abgelaufen ist, der Client die Nachricht nicht von dem Speichermittel abruft.

2. Verfahren nach Anspruch 1, wobei die Aktion umfasst, dass der Client einen Sprachanruf über das Kommunikationssystem unter Verwendung einer Rufkennung, die in der Nachricht eingebettet ist, initiiert.

3. Verfahren nach Anspruch 2, wobei die Nachricht eine Sprachkonferenz-Erinnerungsnachricht ist und die Rufkennung, die in der Nachricht eingebettet ist, die Sprachkonferenz-Rufkennung ist.

4. Verfahren nach Anspruch 3, wobei die Rufkennung eine Telefonnummer oder eine Internet-Protokoll-Netzkennung ist.

5. Verfahren nach Anspruch 2, wobei die Nachricht eine Nachricht von einer Fernsprechauskunft ist und die Rufkennung, die in der Nachricht eingebettet ist, eine Rufkennung einer weiteren Entität ist, die von dem Benutzer von der Fernsprechauskunft angefordert wurde.

6. Verfahren nach Anspruch 5, wobei die Rufkennung eine Telefonnummer, eine Internet-Protokoll-Netzkennung, eine E-Mail-Adresse oder eine SMS-Nummer ist.

7. Verfahren nach Anspruch 1, wobei die Aktion umfasst, dass das Endgerät einen Webbrowser ausführt und ein Dokument anzeigt, das sich auf einer Adresse befindet, die in die Nachricht eingebettet ist.

8. Verfahren nach Anspruch 7, wobei die Nachricht eine Nachricht von einem Auktionswebsite-Betreiber ist und die Adresse, die in die Nachricht eingebettet ist, die Adresse einer Webseite ist, die eine Auktion betrifft, an der der Benutzer teilnimmt.

9. Verfahren nach Anspruch 7, wobei die Nachricht eine Nachricht von einem Zahlungsdienst ist, der von der zweiten Entität betrieben wird, und die Adresse, die in die Nachricht eingebettet ist, die Adresse einer Webseite ist, die von dem Benutzer vorgenommene Zahlungen betrifft.

10. Verfahren nach einem vorhergehenden Anspruch, das weiterhin den Schritt des Zugreifens auf Informationen, die den Benutzer betreffen, von dem Nachrichtenübertragungsmittel durch die erste Entität vor dem Schritt des Übertragens der Nachricht umfasst.

11. Verfahren nach Anspruch 10, wobei die Informationen, die den Benutzer betreffen, die Sprache des Benutzers und/oder die Währung des Benutzers umfassen.

12. Verfahren nach einem vorhergehenden Anspruch, das weiterhin den Schritt des Übertragens einer Berichtsnachricht an die erste Entität als Reaktion darauf, dass der Client die Nachricht abruft, durch das Nachrichtenübertragungsmittel umfasst.

13. Verfahren nach einem vorhergehenden Anspruch, das weiterhin den Schritt des Übertragens einer Berichtsnachricht an die erste Entität als Reaktion auf das Ablaufen der Zeitbegrenzung durch das Nachrichtenübertragungsmittel umfasst.

14. Verfahren nach einem vorhergehenden Anspruch, wobei das Kommunikationssystem ein Peer-to-Peer-Kommunikationssystem ist.

15. System zum Übertragen einer Nachricht von einer ersten Entität (118) an ein Endgerät (106) eines Benutzers (104) über ein Kommunikationssystem (110), wobei:
die erste Entität Mittel zum Übertragen der Nachricht an ein Nachrichtenübertragungsmittel (112) umfasst;
das Nachrichtenübertragungsmittel Mittel (126) zum Erzeugen einer Benachrichtigungsnachricht aus der Nachricht, Speichermittel (128) zum Speichern der Nachricht und Mittel zum Übertragen der Benachrichtigungsnachricht an einen Client (108), der auf dem Endgerät ausgeführt wird, über das Kommunikationssystem umfasst und
der Client Mittel zum Abrufen der Nachricht von dem Speichermittel über das Kommunikationssystem als Reaktion auf das Empfangen der Benachrichtigungsnachricht und Mittel zum Anzeigen der Nachricht dem Benutzer auf einem Anzeigemittel des Endgeräts umfasst,
wobei das Kommunikationssystem von einer zweiten Entität betrieben wird, die Mittel zum Autorisieren der ersten Entität, auf das Nachrichtenübertragungsmittel zuzugreifen, das mit dem Kommunikationssystem verbunden ist, umfasst;
**dadurch gekennzeichnet, dass**:
die Nachricht einen Auslöser umfasst, der ein Echtzeit-Ereignis betrifft, das in dem Kommunikationssystem auftritt, und der bewirkt, dass das Endgerät eine Aktion als Reaktion auf Auslösung durch den Benutzer durchführt; und
die erste Entität eine Zeitbegrenzung des Echtzeit-Ereignisses definiert und dadurch mit der Nachricht eine Laufzeit für die Auslieferung der Nachricht in Verbindung bringt, und der Client dazu konfiguriert ist zu prüfen, ob die Zeitbegrenzung abgelaufen ist, so dass, wenn die Zeitbegrenzung abgelaufen ist, der Client die Nachricht nicht von dem Speichermittel abruft.

16. Benutzerendgerät (106), das mit einem Kommunikationssystem (110) verbunden ist und dazu eingerichtet ist, eine Nachricht zu empfangen, die von einer ersten Entität (118) über das Kommunikationssystem übertragen wird, wobei das Benutzerendgerät Folgendes umfasst:
einen Client (108), der auf dem Endgerät ausgeführt wird und der Mittel zum Empfangen einer Benachrichtigungsnachricht, die von einem Nachrichtenübertragungsmittel (112) übertragen wird, das mit dem Kommunikationssystem verbunden ist, und Mittel zum Abrufen der Nachricht von einem Speichermittel über das Kommunikationssystem als Reaktion auf das Empfangen der Benachrichtigungsnachricht umfasst; und
Anzeigemittel zum Anzeigen der Nachricht dem Benutzer;
**dadurch gekennzeichnet, dass**:
die Nachricht einen Auslöser umfasst, der ein Echtzeit-Ereignis betrifft, das in dem Kommunikationssystem auftritt, und der bewirkt, dass das Endgerät eine Aktion als Reaktion auf Auslösung durch den Benutzer durchführt; und
die erste Entität eine Zeitbegrenzung des Echtzeit-Ereignisses definiert und dadurch mit der Nachricht eine Laufzeit für die Auslieferung der Nachricht in Verbindung bringt, und der Client dazu konfiguriert ist zu prüfen, ob die Zeitbegrenzung abgelaufen ist, so dass, wenn die Zeitbegrenzung abgelaufen ist, der Client die Nachricht nicht von dem Speichermittel abruft.

## Revendications

1. Procédé permettant de transmettre un message d'une première entité (118) à un terminal (106) d'un utilisateur (104) par le biais d'un système de communication (110), comportant :
ladite première entité transmettant ledit message à un moyen de transmission de message (112) ;
ledit moyen de transmission de message générant un message de notification à partir dudit message et stockant ledit message dans un moyen de stockage (128) ;
l'étape consistant à transmettre ledit message de notification à un client (108) exécuté sur ledit terminal par le biais dudit système de communication ; et
en réponse à la réception dudit message de notification, ledit client extrait ledit message en provenance dudit moyen de stockage par le biais dudit système de communication ; et
l'étape consistant à afficher ledit message à l'attention dudit utilisateur sur un moyen d'affichage dudit terminal ;
une seconde entité exploitant le système de communication et autorisant ladite première entité à accéder au moyen de transmission de message connecté audit système de communication ; **caractérisé par**
ledit message comportant un actionneur se rapportant à un événement en temps réel se produisant à l'intérieur du système de communication qui amène le terminal à effectuer une action en réponse à un actionnement par l'utilisateur ; et
ladite première entité définissant une limite temporelle de l'événement en temps réel et associant de ce fait au message une durée de vie pour la remise du message, et ledit client vérifiant si la limite temporelle s'est écoulée, de telle sorte que, si la limite temporelle s'est écoulée, ledit client n'extrait pas le message en provenance du moyen de stockage.

2. Procédé selon la revendication 1, dans lequel ladite action comporte l'initialisation par le client d'un appel vocal par le biais dudit système de communication en utilisant un identificateur d'appel incorporé dans ledit message.

3. Procédé selon la revendication 2, dans lequel ledit message est un message de rappel de conférence vocale et l'identificateur d'appel incorporé dans ledit message est l'identificateur d'appel de conférence vocale.

4. Procédé selon la revendication 3, dans lequel l'identificateur d'appel est un numéro de téléphone ou une identité de réseau à voix sur le protocole Internet.

5. Procédé selon la revendication 2, dans lequel ledit message est un message en provenance d'un service de demande d'annuaire et l'identificateur d'appel incorporé dans ledit message est un identificateur d'appel d'une autre entité demandée par l'utilisateur en provenance du service de demande d'annuaire.

6. Procédé selon la revendication 5, dans lequel l'identificateur d'appel est l'un parmi un numéro de téléphone, une identité de réseau à voix sur le protocole Internet, une adresse de courrier électronique, ou un numéro de service d'envoi de messages courts.

7. Procédé selon la revendication 1, dans lequel ladite action comporte le terminal exécutant un navigateur Web et affichant un document situé au niveau d'une adresse incorporée dans ledit message.

8. Procédé selon la revendication 7, dans lequel ledit message est un message en provenance d'un opérateur de site de vente aux enchères et l'adresse incorporée dans ledit message est l'adresse d'une page Web se rapportant à des enchères auxquelles l'utilisateur participe.

9. Procédé selon la revendication 7, dans lequel ledit message est un message en provenance d'un service de paiement exploité par la seconde entité et l'adresse incorporée dans ledit message est l'adresse d'une page Web se rapportant à des paiements effectués par l'utilisateur.

10. Procédé selon l'une quelconque des revendications précédentes, comportant par ailleurs l'étape de ladite première entité accédant à des informations se rapportant audit utilisateur en provenance dudit moyen de transmission de message avant l'étape de transmission dudit message.

11. Procédé selon la revendication 10, dans lequel lesdites informations se rapportant audit utilisateur comportent la langue de l'utilisateur et/ou la monnaie de l'utilisateur.

12. Procédé selon l'une quelconque des revendications précédentes, comportant par ailleurs l'étape dudit moyen de transmission de message transmettant un message de rapport à ladite première entité en réponse audit client extrayant le message.

13. Procédé selon l'une quelconque des revendications précédentes, comportant par ailleurs l'étape dudit moyen de transmission de message transmettant un message de rapport à ladite première entité en réponse à l'expiration de ladite limite temporelle.

14. Procédé selon l'une quelconque des revendications précédentes, dans lequel ledit système de communication est un système de communication de poste à poste.

15. Système permettant de transmettre un message d'une première entité (118) à un terminal (106) d'un utilisateur (104) par le biais d'un système de communication (110), dans lequel :
ladite première entité comporte un moyen permettant de transmettre ledit message à un moyen de transmission de message (112) ;
ledit moyen de transmission de message comporte un moyen (126) permettant de générer un message de notification à partir dudit message, un moyen de stockage (128) permettant de stocker ledit message, et un moyen permettant de transmettre ledit message de notification à un client (108) exécuté sur ledit terminal par le biais dudit système de communication ; et
ledit client comporte un moyen permettant d'extraire ledit message en provenance dudit moyen de stockage par le biais dudit système de communication en réponse à la réception dudit message de notification, et un moyen permettant d'afficher ledit message à l'attention dudit utilisateur sur un moyen d'affichage dudit terminal ;
le système de communication est exploité par une seconde entité qui comporte un moyen permettant d'autoriser ladite première entité à accéder au moyen de transmission de message connecté audit système de communication ; **caractérisé en ce que** :
ledit message comporte un actionneur se rapportant à un événement en temps réel se produisant à l'intérieur du système de communication qui amène le terminal à effectuer une action en réponse à un actionnement par l'utilisateur ; et
ladite première entité définit une limite temporelle de l'événement en temps réel et associe de ce fait au message une durée de vie pour la remise du message, et ledit client est configuré pour vérifier si la limite temporelle s'est écoulée, de telle sorte que, si la limite temporelle s'est écoulée, ledit client n'extrait pas le message en provenance du moyen de stockage.

16. Terminal d'utilisateur (106) connecté à un système de communication (110) et arrangé pour recevoir un message transmis en provenance d'une première entité (118) par le biais du système de communication, comportant :
un client (108) exécuté sur ledit terminal, comportant un moyen permettant de recevoir un message de notification transmis par un moyen de transmission de message (112) connecté audit système de communication, et un moyen permettant d'extraire ledit message en provenance d'un moyen de stockage par le biais dudit système de communication en réponse à la réception dudit message de notification ; et
un moyen d'affichage permettant d'afficher ledit message à l'attention dudit utilisateur ;
**caractérisé en ce que** :
ledit message comporte un actionneur se rapportant à un événement en temps réel se produisant à l'intérieur du système de communication qui amène le terminal à effectuer une action en réponse à l' actionnement par l'utilisateur ; et
ladite première entité définit une limite temporelle de l'événement en temps réel et associe de ce fait au message une durée de vie pour la remise du message, et ledit client est configuré pour vérifier si la limite temporelle s'est écoulée, de telle sorte que, si la limite temporelle s'est écoulée, ledit client n'extrait pas le message en provenance du moyen de stockage.
